# EUROPEAN PATENT SPECIFICATION

(11) **EP 3 952 223 B1**
(45) Date of publication and mention of the grant of the patent: **24.04.2024**
(21) Application number: 20778049.5
(22) Date of filing: 27.02.2020
(51) Int. Cl.: H04L 12/42, H04L 41/12, H04L 41/22, H04L 41/0806, H04L 41/0853, G05B 19/05, G05B 19/418

(54) **NETWORK MANAGEMENT DEVICE, MANAGEMENT METHOD, MANAGEMENT PROGRAM, AND RECORDING MEDIUM**
NETZWERKVERWALTUNGSVORRICHTUNG, VERWALTUNGSVERFAHREN, VERWALTUNGSPROGRAMM UND AUFZEICHNUNGSMEDIUM
DISPOSITIF DE GESTION DE RÉSEAU, PROCÉDÉ DE GESTION, PROGRAMME DE GESTION, ET SUPPORT D'ENREGISTREMENT

(30) Priority: 27.03.2019 JP 2019059809
(43) Date of publication of application: 09.02.2022
(73) Proprietor: OMRON Corporation, Shiokoji-dori, Shimogyo-Ku Kyoto-shi Kyoto 600-8530 (JP)
(72) Inventor: IKEO, Yuji, Kyoto-shi, Kyoto 600-8530 (JP)
(74) Representative: Becker, Eberhard
(86) International application number: PCT/JP2020/007899
(87) International publication number: WO 2020/195503

(56) References cited:
- EP-A1- 2 672 662
- EP-A1- 2 688 002
- EP-A1- 3 561 623
- JP-A- 2002 101 125

## Description

### BACKGROUND OF THE INVENTION

### Field of the Invention

The invention relates to a management device, a management method, and a management program which manage a network including nodes such as a master device and slave devices, etc.

### Description of Related Art

In factory automation (FA), manufacturing equipment provided in a factory is controlled by an industrial network system configured from nodes such as various slave devices controlling and collecting data of the manufacturing equipment, a master device collectively managing the slave devices, etc.

Most issues in the manufacturing equipment of the factory, such as a production line, relate to network communication. When an issue relating to network communication arises, issues relating to the applications of motion control and safety control, etc., operated at the same time in the system occur together.

As a means for solving the communication issue of such network, a ring topology connecting the slave devices is set to ensure network redundancy. However, in order to configure the ring topology, it is necessary to wire communication cables to be ring-like, and required wiring locations are increased. As a result, the issue that the wiring becomes complicated and difficult to understand may arise.

Examples of the technologies for assisting in the network configuration design of various connection configurations including ring topology include the technology disclosed in Patent Document 1, for example. In Patent Document 1, a technology for designing a system configuration of a control system configured from machines such as a programmable logic controller (PLC), etc. is disclosed.

Patent literature EP 3561623 A1 relates to a network management device that supports restoration from an abnormality, manages a network including a master device and a slave device connected to the master device, and includes a network configuration diagram display unit that displays a network configuration diagram based on design information of a network according to a design created by a user, a state information acquisition unit that acquires state information relating to a state of the slave device, and a state display unit that displays the state on the network configuration diagram in association with the slave device based on the state information.

Patent literature EP 2688002 A1 relates to a design assistance device which includes: a design information storage section configured to store design information containing at least information of the slave devices and information of a topology in a network system in accordance with a design created by a user; an actual configuration information generation section configured to, based on information collected by the master device from the slave devices in an actual network system, generate actual configuration information containing at least the information of the slave devices and the information of the topology in the actual network system; a comparison section configured to compare the design information and the actual configuration information; and an output section configured to, based on results of comparison by the comparison section, generate a comparison screen indicating the respective configurations of the designed network system and the actual network system along with their commonalities and differences and outputting the comparison screen to a display device.

Patent literature EP 2672662 A1 relates to a technique for detecting a connection abnormality of a slave device, in a network system including a master device and slave devices. In the network system, data is transmitted from the master device and then is returned to the master device through the respective slave devices. Each slave device has an upstream-side port and a downstream-side port. The connection abnormality detection method includes a step of acquiring topology information of the network system, a step of closing or opening the port of each slave device such that a serial topology is formed to include a target slave device located on the downmost stream side, a step of transmitting inspection data after the control of the port, and a step of detecting a connection abnormality of the device on the basis of a status of return of the inspection data.

### [Prior Art Document]

### [Patent Document]

[Patent Document 1] Japanese Laid-open No. 2010-272034

### SUMMARY OF THE INVENTION

### [Problems to be Solved by the Invention]

In the technology for assisting in the design of a network configuration, by properly connecting wires on the editor for carrying out the design, a connection mode among the slave devices can be displayed in a ring topology in the designed network configuration. However, in order for the user to check whether the redundant wiring is set correctly as intended for the actual slave devices from which the ring topology is to be configured, for the actual devices, it is necessary to visually check the wiring between the slave devices or to perform a disconnection test of the communication cable.

An objective of the invention is to provide a management device assisting in setting of a ring topology in an actual network configuration.

### [Means for Solving Problems]

The invention is set out in the appended set of claims. The following disclosure serves a better understanding of the present invention.

### [Inventive Effects]

According to the invention, a management device assisting in setting of a ring topology in an actual network configuration can be provided.

### BRIEF DESCRIPTION OF THE DRAWINGS

FIG. 1 is a block diagram illustrating a schematic configuration of an industrial network system 100 according to an embodiment of the invention.
FIG. 2 is a block diagram illustrating a schematic configuration of a management device 3 according to an embodiment of the invention.
FIG. 3 is an example of a screen at the time when a ring topology is detected.
FIG. 4 is an example of a screen in a case where a slave device not supporting ring topology is connected in a ring topology.
FIG. 5 is a flowchart illustrating a flow of processes in a management method according to an embodiment of the invention.
FIG. 6 is a flowchart illustrating a flow of processes in a management method according to an embodiment of the invention.

### DESCRIPTION OF THE EMBODIMENTS

Hereinafter, several embodiments of the invention will be described in detail with reference to the accompanying drawings. Although a management device in a network system compliant with the standard of Ethernet for Control Automation Technology (EtherCAT, registered trademark) is described in the following embodiment. The invention is applicable to a network system including one or more nodes.

### (Overall System Configuration)

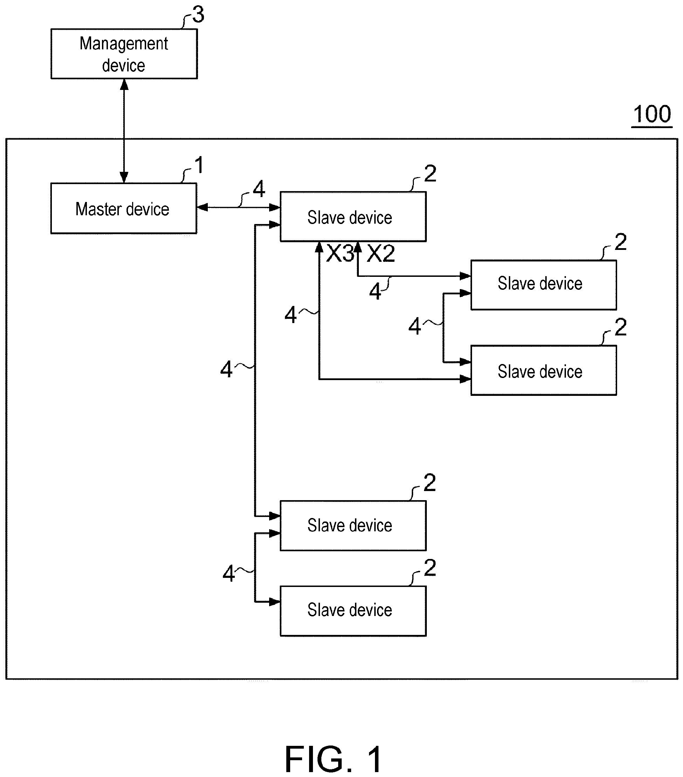

FIG. 1 is a block diagram illustrating a schematic configuration of an industrial network system 100 according to an embodiment of the invention. The industrial network system 100 includes a network including a master device 1 and slave devices 2 connected to the master device 1 and a management device 3 connected to the master device 1. The master device 1 and the slave device 2 are connected by a cable 4 suitable for EtherCAT communication, and the slave devices 2 are also connected to each other by the cables 4 suitable for EtherCAT communication. The master device 1 and the management device 3 are connected through Ethernet (registered trademark) communication or USB communication in a wired or wireless manner. In the embodiment exemplified herein, the case where the nodes connected to the master device 1 are all slave devices 2 is described.

The master device 1 is configured by a device collectively managing the slave devices 2, such as a programmable logic controller (PLC). The master device 1 controls the slave device 2 by transmitting control commands for performing sequence control to the slave devices 2, and monitors the states of the slave devices 2 by receiving various data from the slave devices 2.

The slave devices 2 are devices controlling and collecting data of manufacturing equipment and performing control operations on the manufacturing equipment in accordance with the control commands from the master device 1 and processes of rewriting and returning the received control commands. As the slave device 2, a slave terminal, an NX unit, a CJ unit, an
IO-LInk device, a power unit, a motor unit, a counter unit, an image unit, a communication unit, an I/O unit, etc., are included. The slave device 2 is properly connected to the manufacturing equipment in a wired or wireless manner. As the manufacturing equipment, an input device such as a press button, a limit switch, and an output device such as a lamp are included.

The number of the slave devices 2 connectible to the master device 1 and the topology are not particularly limited. In the embodiment, at most 512 slave devices 2 are connectible to one master device 1, and, in accordance with the convenience of the cooperation and wiring among the slave devices 2, any topology, such as a ring-like topology, a tree-like topology, or a star-like topology is applicable. Also, in addition to the master device 1 and the slave devices 2, the nodes may further include a hub device.

### (Management Device)

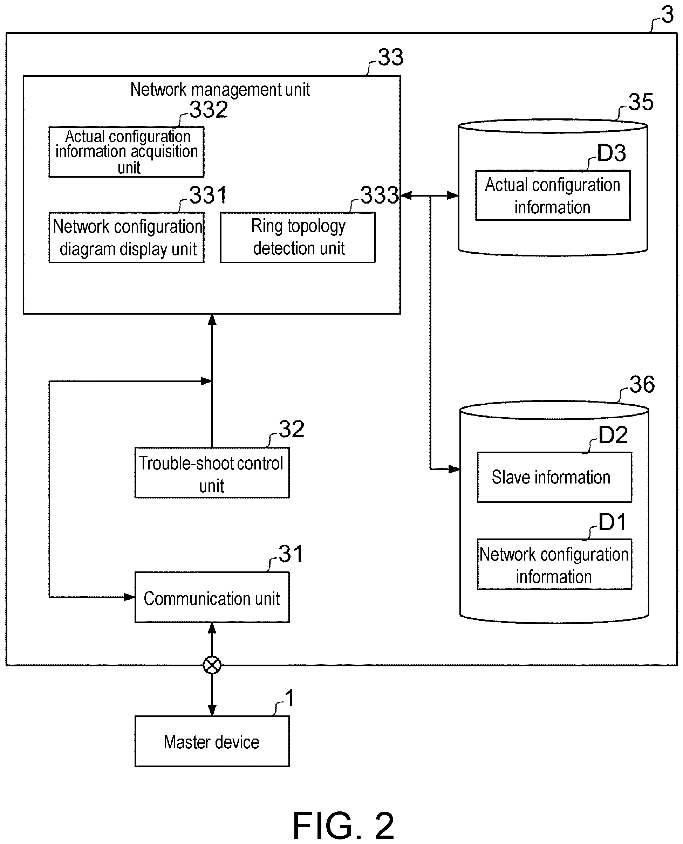

FIG. 2 is a block diagram illustrating a schematic configuration of the management device 3 according to an embodiment of the invention. The management device 3 is a computer managing the network of the master device 1 and the slave devices 2, and, for example, can be configured from a general-purpose personal computer. As the hardware configuration, the management device 3 includes, for example, a central processing unit (CPU), a main storage device (memory), an auxiliary storage device (e.g., hard disk, SSD), a display device, and an input device (e.g., keyboard, mouse).

In addition, as functional blocks, the management device 3 includes a communication unit 31, a trouble-shoot control unit 32, a network management unit 33, a network management storage unit 35, and an auxiliary storage unit 36. The communication unit 31, the trouble-shoot control unit 32, and the network management unit 33 are realized by reading a management program (not shown) stored in the auxiliary storage device to the main storage device and executing the program by the CPU. The management program may be recorded in a non-temporary computer readable recording medium such as a CD-ROM, or the recording medium may also be read by the management device 3 to install the management program in the management device 3. Alternatively, the codes of the management program may also be downloaded to the management device 3 via a communication network such as the Internet.

The storage unit 35 can be set in the main storage device. In addition, the auxiliary storage device 36 can be set in the auxiliary storage device.

The communication unit 31 is a communication unit with which the management device 3 communicates with the master device 1. For example, the communication unit 31 is provided with a function of switching the communication protocol in accordance with the master device 1, a function of regularly transmitting/receiving related data, such as event logs, etc., for regularly monitoring an anomaly occurring in a node, and a function of performing a transmitting/receiving process for acquiring the event logs from each node.

The trouble-shoot control unit 32 has a function of supporting solution of various troubles relating to the network including the master device 1 and the slave devices 2.

The network management unit 33 has a function of assisting in the state management of the network by the user. In order to realize such function, the network management unit 33 includes a network configuration diagram display unit 331, an actual configuration information acquisition unit 332, and a ring topology detection unit 333.

In the embodiment, the auxiliary storage unit 36 of the management device 3 stores in advance a network configuration information D1, as a project file, describing the designed network configuration created by the user, and a slave information D2 describing the unique information per type of each of the slave devices 2 from which the industrial network system 100 is configured.

The network configuration information D1 describes the profile information of the respective slave devices 2 from which the network system 100 is configured, the slave connection information, the address information, etc. The profile information is the information for identifying the type of the slave device 2, and includes, for example, the product code (model), the vendor ID, the revision number, etc. of the slave device. The slave connection information is the information for understanding the connection configuration (topology) of the slave devices. For example, the slave connection information includes the information for specifying the devices and the ports of the connection destinations of the slave devices, the connection information between ports, the information relating to the state of the ring topology, etc. The address information is the information indicating the values of the node addresses assigned to the slave devices.

The slave information D2 is a file created in advance in the format such as the XML format, etc., by the vendor of each slave device 2. The slave information D2 includes profile information and port information. The profile information is the information for identifying the types of the slave devices 2, and includes, for example, the product codes (models), the vendor IDs, the revision numbers, and whether there is ring topology support, etc., of the slave devices 2. The port information is the information relating to the ports owned by the slave devices 2, and includes, for example, information such as the number of ports, the types of ports, the start port/end port supporting the ring topology, etc. Since the slave information D2 is the file created by the vendor of each slave device 2, the information on whether there is support for ring topology, and the start port/end port for supporting the ring topology is the unique information of each slave device (i.e., the specification of each slave device).

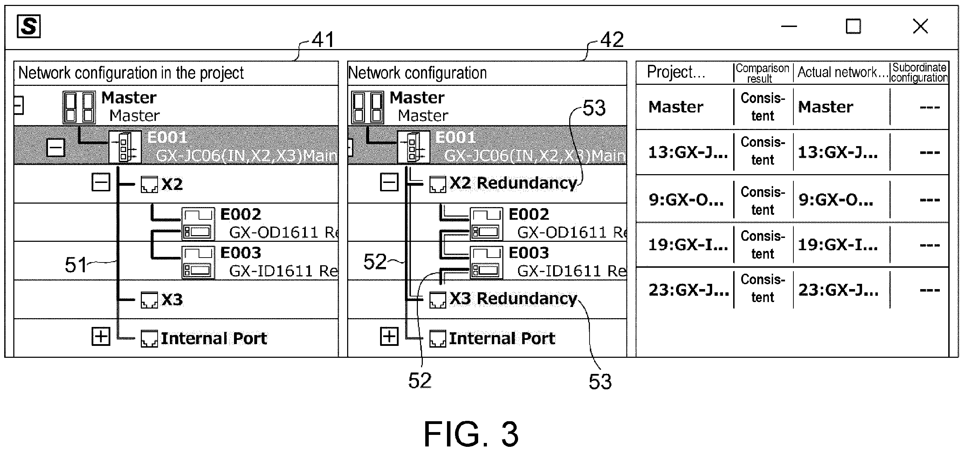

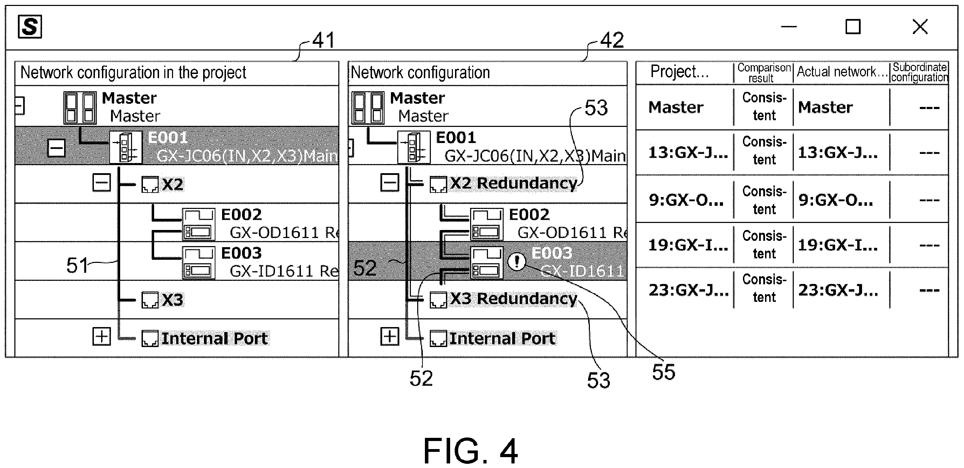

The network configuration diagram display unit 331 is a functional block displaying the network configuration diagram showing the connection relationship of the nodes. The network configuration diagram display unit 331 refers to the network configuration information D1 stored in the auxiliary storage unit 36 and graphically displays a network configuration diagram 41 shown in the left side of FIGs. 3 and 4. In the network configuration diagram 41, the nodes included in the network are indicated by icons and are expressed as a tree by the connection lines 51. In addition, in the vicinity of each icon, the node address and the type name of the node are displayed. It should be noted that the specific display mode of the network configuration diagram 41 is not limited thereto, as long as the user can intuitively understand the network configuration.

In addition, in the embodiment, the network configuration diagram display unit 331 refers to actual configuration information D3 to be described afterwards and graphically displays an actual network configuration diagram 42 shown in the center of FIGs. 3 and 4.

The actual configuration information acquisition unit 332 is a functional block for acquiring the information of the actual network configuration (actual configuration information). In the embodiment, in the industrial network system 100 that is actually constructed, the master device 1 performs a network scan process, thereby collecting the information of each slave device 2 and generating the actual configuration information. The actual configuration information acquisition unit 332 receives the actual configuration information from the master device 1, and reads the actual configuration information as the actual configuration information D3 shown in FIG. 2 to the storage unit 35.

The format of the actual configuration information D3 corresponds to the format of the network configuration information D1. Compared with the network configuration information D1 which is designed information created by the user, the actual configuration information D3 differs in that it is generated based on the information actually collected by the master device 1 from each slave device 2 in the industrial network system 100 that is actually constructed. That is, the actual configuration information D3, like the network configuration information D1, describes the profile information of the respective slave devices 2 from which the network system 100 is configured, the slave connection information, the address information, etc. The slave connection information includes the information specifying the devices and the ports of the connection destinations of the slave devices and the connection information between the ports.

The network scan process is executed by four steps in the following, for example. In the following descriptions about the processes of the respective steps, a network under the standard of EtherCAT is described as an example.

In the first step, the master device 1 determines the number of the slave devices 2 (number of nodes) connected to the master device 1. In order to determine the number of nodes, the master device 1 issues a broadcast command (BRD) to the network. The number of responses of the broadcast command is equal to the number of nodes connected to the master device 1. For example, in the standard of EtherCAT, it is required that all the nodes (all the EtherCAT slaves) present in the network respond to the broadcast command.

In the second step, the master device 1 acquires, from each node in the network, the node address information, and the information of the communication port where connection is established in each node. The information of the communication port includes the connection information between ports. In order to acquire information, the master device 1 issues an auto increment physical read (APRD) command to each node.

For example, the standard of EtherCAT requires that the node has at maximum four communication ports, the node keeps the state of each communication port in a predetermined register, the node keeps the node address in a predetermined register. In the standard of EtherCAT, the APRD command is a command used for reading a register. The reading is performed by specifying a node by using a position address (an address indicating the number of connected devices, counted from the master device 1).

In Step 3, the master device 1 creates a topology of the network by using the information of the communication ports acquired in Step 2 and the rule of packet circulation order.

For example, the standard of EtherCAT requires that an IN communication port of a node is port 0. It is also required that the order in which packets circulate through the communication ports is: port 0, port 3, port 1, and port 2.

In the fourth step, the master device 1 acquires information for specifying the type of the node from each node in the network. In order to acquire information, the master device 1 issues the auto increment physical read (APRD) command to each node.

For example, in the standard of EtherCAT, it is required that the node keeps, as the information for specifying the type, the vendor ID, the product code, the revision code, in a register.

According to the four steps above, the network scan process is performed, and the actual configuration information D3 of the network is generated by the master device 1. The master device 1 generates the actual configuration information D3 of the network based on the information for specifying the type of the node and the connection information between the ports acquired from each node in the network.

The ring topology detection unit 333 is a functional block which detects a ring topology configured from the slave devices 2 in the industrial network system 100 that is actually constructed based on the actual configuration information D3.

FIG. 3 is an example of a screen at the time when a ring topology is detected, and FIG. 4 is an example of a screen in a case where a slave device not supporting ring topology is connected in a ring topology.

Referring to FIGs. 3 and 4, the procedure in which the ring topology detection unit 333 detects the ring topology configured from the slave devices 2 is described in detail.

The ring topology detects unit 333 detects the ring topology based on the connection information between the ports in the slave connection information included in the actual configuration information D3. At the time of detecting the ring topology, for the ports between the slave devices 2, the ring topology detection unit 333 traces the connection relationship between the input port and the output port in the order from the input port to the output port. By tracing the connection relationship of the ports in order in this way, a ring topology which physically connects, using a communication cable, the place where the output port of the slave device 2 located upstream and the output port of the slave device 2 located downstream in the order of the flow of the packet is detected.

In the example shown in FIG. 3, in the actual network configuration, the output port with a node address E001 and the output port with a node address E003 are connected, and the ring topology detection unit 333 detects a ring topology configured in the node with a node address E002 and the node with the node address E003 from the node with the node address E001.

In the case where the ring topology is detected, the ring topology detection unit 333 identifiably displays the positions of the nodes from which the ring topology is configured in the actual network configuration diagram 42. In addition, the ring topology detection unit 333 sets the value "effective" to the information relating to the state of the ring topology of the slave device (node) as the start of the ring topology in the network configuration information D1.

In the example shown in FIG. 3, the ring topology detection unit 333 indicates that the ring topology is configured from the node with the node address E002 and the node with the node address E003 from the node with the address E001 by using double lines 52 indicating the connection among the respective nodes in the tree expression in the actual network configuration diagram 42. The double line 52 is also used for display between the output port of the node with the node address E003 and an output port X3 of the node address E001. In addition, in the example shown in FIG. 3, in order to illustrate the configuration of the ring topology, the ring topology detection unit 333 displays expressions 53 meaning that the ring topology is configured in the vicinities of the output ports X2 and X3 of the node with the node address E001. Accordingly, regarding the actual slave devices 2 from which the ring topology is to be configured, the user can more easily understand the places where redundant wirings are set in the graphical display in the actual network configuration diagram 42. Therefore, the operation for setting the ring topology in the actual network configuration is simplified.

It is noted that the mode for displaying the ring topology in the actual network configuration diagram 42 is not limited to the above mode. For example, a mode in which the icons and/or the connection lines are displayed with blinking or highlighting can be applied.

The ring topology detection unit 333 determines whether the ring topology is supported for each of the slave devices 2 determined to configure the ring topology as the physical connection formed by the communication cable. For example, the ring topology detection unit 333 determines whether the ring topology is supported based on whether there is ring topology support in the profile information included in the slave information D2. Alternatively, the ring topology detection unit 333 determines whether the ring topology is supported based on the information of the start port/end port supporting the ring topology of the port information included in the slave information D2.

In the case of determining that the slave device 2 not supporting the ring topology is connected in the ring topology, the ring topology detection unit 333 identifiably displays the slave device 2 not supporting the ring topology in the actual network configuration diagram 42.

In the example shown in FIG. 4, an icon 55 is displayed in the vicinity of the node with the node address E003, and that the node with the node address E003 does not support the ring topology is identifiably displayed. In the mode shown in FIG. 4, an icon 55 is a warning icon. Accordingly, among the actual slave devices from which the ring topology as the physical connection by the communication cable is configured, the user can more easily notice the slave device not supporting the ring topology through the graphical display in the actual network configuration diagram 42. In addition, the user can notice the slave device which does not support the ring topology and with which an issue may possibly occur through use of the ring topology before the industrial network system is actually put into work. Therefore, the operation for setting the ring topology in the actual network configuration is simplified.

It is noted that the mode for displaying the node not supporting the ring topology in the actual network configuration diagram 42 is not limited to the above mode. For example, a mode in which the icons and/or the connection lines are displayed with blinking or highlighting can be applied.

### (Management Method)

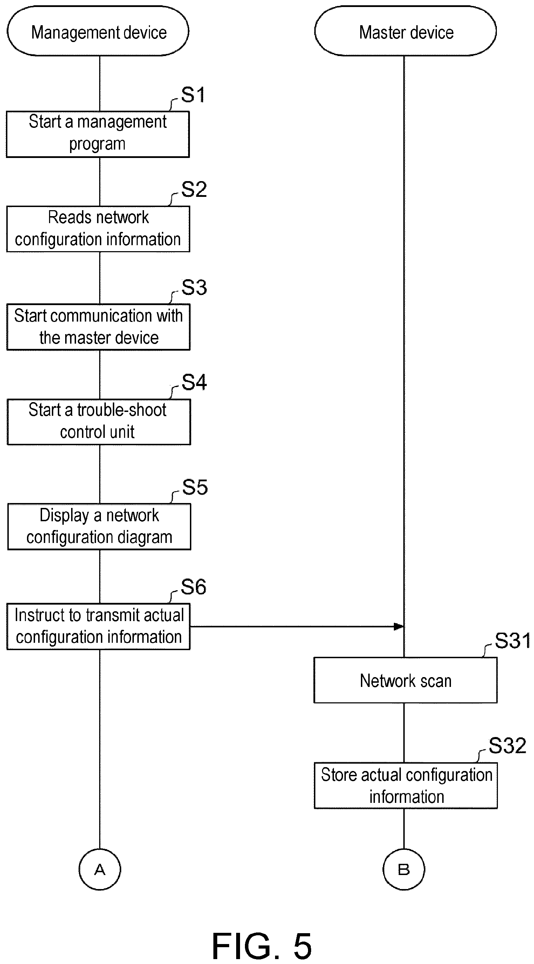

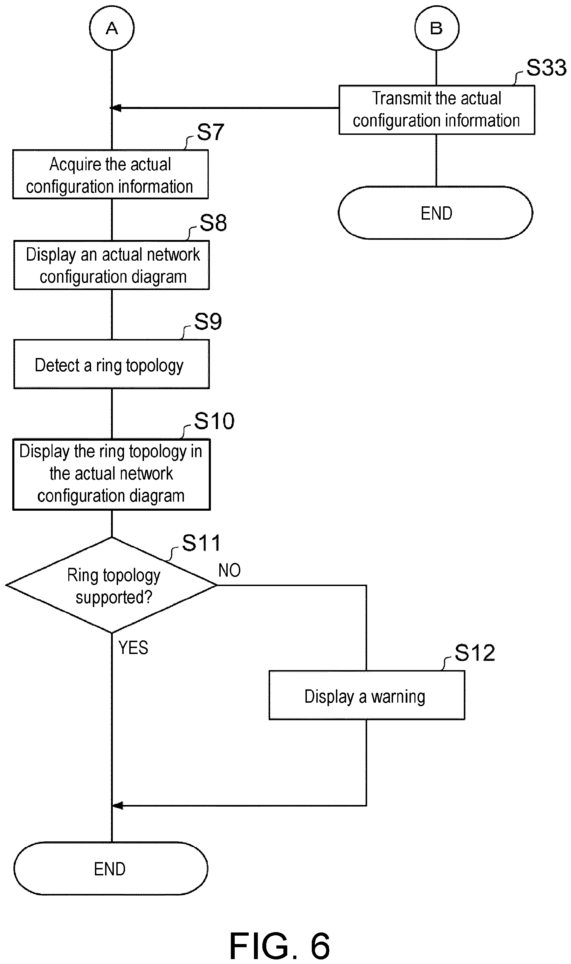

FIGs. 5 and 6 are flowcharts illustrating a process flow in a management method for managing the network including the master device 1 and the slave device 2. The same figures show the process procedure in the management device 3 and the master device 1.

Firstly, the user configures a ring topology in the network including the master device 1 and the slave devices 2. As preparation for a production line, the user connects a communication cable between the master device 1 and multiple slave devices 2. For the slave devices 2 intended for the redundancy function through using the ring topology, additional wiring in the shape of ring topology is performed by additionally the connecting communication cable.

Then, when the user starts the management program in the management device 3 to open the project file (S1), the network management unit 33 is started, and the network configuration diagram display unit 331 reads the network configuration information D1 stored in the auxiliary storage unit 36 to the storage unit 35 (S2). Then, when the user presses an on-line button (not shown) in the screen of the management program, the communication between the communication unit 31 and the master device 1 starts (S3).

Then, when the user presses a trouble-shoot button (not shown) in the screen of the management program, in the management device 3, the trouble-shoot control unit 32 is started (S4). Then, the network configuration diagram display unit 331 displays the network configuration diagram 41 based on the network configuration information D1 (S5).

Then, the actual configuration information acquisition unit 332 instructs the master device 1 to transmit the actual configuration information (S6). In response thereto, the master device 1 collects the information of each slave device 2 by performing the network scan process (S31), and stores the actual configuration information in its own device (S32). The master device 1 transmits the actual configuration information stored in its own device to the management device 3. Accordingly, the actual configuration information acquisition unit 332 acquires the actual configuration information D3 and stores the actual configuration information D3 in the storage unit 35 (S7). Then, the network configuration diagram display unit 331 displays the actual network configuration diagram 42 based on the actual configuration information D3 (S8).

Then, the ring topology detection unit 333 detects the ring topology configured from the slave devices 2 in the industrial network system 100 that is actually constructed based on the actual configuration information D3 (S9). The ring topology detection unit 333 identifiably displays the positions of the nodes from which the ring topology is configured in the actual network configuration diagram 42 (S10). In the actual network configuration diagram 42 shown in FIG. 3, the connections between the respective nodes from which the ring topology is configured are displayed by using the double lines 52. Accordingly, regarding the actual slave devices, from which the ring topology is to be configured, the user can more easily understand the places where redundant wirings are set in the graphical display in the actual network configuration diagram 42.

In addition, the ring topology detection unit 333 determines whether the ring topology is supported for each node from which the ring topology is configured (S11). The ring topology detection unit 333 identifiably displays the slave device 2 not supporting the ring topology in the actual network configuration diagram 42 (S12). In the actual network configuration diagram 42 shown in FIG. 4, the icon 55 with a sense of warning is displayed in the vicinity of the slave device 2 not supporting the ring topology. Accordingly, among the actual slave devices from which the ring topology as the physical connection by the communication cable is configured, the user can more easily notice the slave device not supporting the ring topology through the graphical display in the actual network configuration diagram 42.

### (Other Modes)

Although the embodiments of the invention have been described above, various modifications can be made.

In the above embodiment, the network configuration diagram 41 is displayed based on the network configuration information D1 stored in the auxiliary storage unit 36 of the management device 3. For example, it may also be that the network configuration information stored in the master device 1 is acquired, and
the network configuration diagram 41 is displayed based on the acquired network configuration information.

### [Reference Sign List]

1: Master device;
2: Slave device;
3: Management device;
4: Cable;
31: Communication unit;
32: Trouble-shoot control unit;
33: Network management unit;
331: Network configuration diagram display unit;
332: Actual configuration information acquisition unit;
333: Ring topology detection unit;
35: Storage unit;
36: Auxiliary storage unit;
41: Network configuration diagram;
42: Actual network configuration diagram;
100: Industrial network system;
D1: Network configuration information;
D2: Slave information;
D3: Actual configuration information

## Claims

1. A management device (3), managing a packet circulating network comprising a master device (1) and a plurality of slave devices (2) connected to the master device (1), the management device (3) comprising:
an actual configuration information acquisition unit (332), acquiring actual configuration information (D3) of the actual network from the master device (1);
a ring topology detection unit (333), detecting a ring topology configured from the slave devices (2) based on the actual configuration information (D3), and identifiably displaying the ring topology in an actual network configuration diagram (42) displayed based on the actual configuration information (D3),
the management device (3) **characterized in that**
the actual configuration information (D3) comprises slave connection information of each of the slave devices (2) and each of the slave connection information comprises between-port connection information, and
the ring topology detection unit (333) traces connection relationship between an input port and an output port in an order from the input port to the output port and detects the ring topology based on the between-port connection information included in the slave connection information.

2. The management device (3) as claimed in claim 1, wherein the ring topology detection unit (333) determines, based on slave information (D2) representing unique information per type of each of the slave devices (2), whether the ring topology is supported for each of the slave devices (2) from which the ring topology is configured, wherein the slave information comprises profile information for identifying types of the slave devices.

3. The management device (3) as claimed in claim 2, wherein the ring topology detection unit (333) identifiably displays the slave device (2) not supporting the ring topology in the actual network configuration diagram (42) displayed based on the actual configuration information (D3).

4. A management method, managing a packet circulating network comprising a master device (1) and a plurality of slave devices (2) connected to the master device (1), the management method comprising:
an actual configuration information acquisition step, acquiring actual configuration information (D3) of the actual network from the master device (1);
a ring topology detection step, detecting a ring topology configured from the slave devices (2) based on the actual configuration information (D3), and identifiably displaying the ring topology in an actual network configuration diagram (42) displayed based on the actual configuration information (D3),
the management method **characterized in that**
the actual configuration information (D3) comprises slave connection information of each of the slave devices (2) and each of the slave connection information comprises between-port connection information, and
the ring topology detection step further comprises tracing connection relationship between an input port and an output port in an order from the input port to the output port and detecting the ring topology based on the between-port connection information included in the slave connection information.

5. A management program, causing a computer to function as the management device (3) as claimed in claim 1, wherein the management program is provided to cause the computer to function as the actual configuration information acquisition unit (332) and the ring topology detection unit (333).

6. A computer-readable recording medium, storing the management program as claimed in claim 5.

## Patentansprüche

1. Verwaltungsvorrichtung (3), die ein paketumlaufendes Netzwerk verwaltet, das eine Master-Vorrichtung (1) und eine Vielzahl von Slave-Vorrichtungen (2) umfasst, die mit der Master-Vorrichtung (1) verbunden sind, wobei die Verwaltungsvorrichtung (3) umfasst:
eine aktuelle Konfigurationsinformations-Erfassungseinheit (332), die die aktuelle Konfigurationsinformationen (D3) des aktuellen Netzwerks von der Master-Vorrichtung (1) erfasst;
eine Ringtopologie-Detektionseinheit (333), die eine Ringtopologie, konfiguriert von den Slave-Vorrichtungen (2), basierend auf den aktuellen Konfigurationsinformationen (D3) detektiert und die Ringtopologie in einem aktuellen Netzwerk-Konfigurationsdiagramm (42), das basierend auf den aktuellen Konfigurationsinformationen (D3) angezeigt wird, identifizierbar anzeigt,
wobei die Verwaltungsvorrichtung (3) **dadurch gekennzeichnet ist, dass**
die aktuellen Konfigurationsinformationen (D3) Slave-Verbindungsinformationen von jeder der Slave-Vorrichtungen (2) umfassen und jede der Slave-Verbindungsinformationen Zwischenanschluss-Verbindungsinformationen umfassen, und
die Ringtopologie-Detektionseinheit (333) die Verbindungsbeziehung zwischen einem Eingangsanschluss und einem Ausgangsanschluss in einer Reihenfolge von dem Eingangsanschluss zu dem Ausgangsanschluss verfolgt und die Ringtopologie basierend auf den Zwischenanschluss-Verbindungsinformationen, die in den Slave-Verbindungsinformationen enthalten sind, detektiert.

2. Verwaltungsvorrichtung (3) gemäß Anspruch 1, wobei die Ringtopologie-Detektionseinheit (333) basierend auf Slave-Informationen (D2), die eindeutige Informationen pro Typ jeder der Slave-Vorrichtungen (2) anzeigen, bestimmt, ob die Ringtopologie für jede der Slave-Vorrichtungen (2), von denen die Ringtopologie konfiguriert ist, unterstützt wird, wobei die Slave-Informationen Profilinformationen zur Identifizierung von Typen der Slave-Vorrichtungen umfassen.

3. Verwaltungsvorrichtung (3) gemäß Anspruch 2, wobei die Ringtopologie-Detektionseinheit (333) die Slave-Vorrichtung (2), die die Ringtopologie nicht unterstützt, identifizierbar in dem aktuellen Netzwerkkonfigurationsdiagramm (42) anzeigt, das basierend auf den aktuellen Konfigurationsinformationen (D3) angezeigt wird.

4. Verwaltungsverfahren, das ein paketumlaufendes Netzwerk verwaltet, das eine Master-Vorrichtung (1) und eine Vielzahl von Slave-Vorrichtungen (2) umfasst, die mit der Master-Vorrichtung (1) verbunden sind, wobei das Verwaltungsverfahren umfasst:
einen aktuellen Konfigurationsinformations-Erfassungsschritt, erfassend aktuelle Konfigurationsinformationen (D3) des aktuellen Netzwerks von der Master-Vorrichtung (1);
einen Ringtopologie-Detektionsschritt, der eine Ringtopologie, konfiguriert von den Slave-Vorrichtungen (2), basierend auf den aktuellen Konfigurationsinformationen (D3) detektiert und die Ringtopologie in einem aktuellen Netzwerkkonfigurationsdiagramm (42), das basierend auf den aktuellen Konfigurationsinformationen (D3) angezeigt wird, identifizierbar anzeigt,
wobei das Verwaltungsverfahren **dadurch gekennzeichnet ist, dass**
die aktuellen Konfigurationsinformationen (D3) Slave-Verbindungsinformationen von jedem der Slave-Vorrichtungen (2) umfassen und jede der Slave-Verbindungsinformationen Zwischenanschluss-Verbindungsinformationen umfassen, und
der Ringtopologie-Detektionsschritt ferner Verfolgen der Verbindungsbeziehung zwischen einem Eingangsanschluss und einem Ausgangsanschluss in einer Reihenfolge von dem Eingangsanschluss zu dem Ausgangsanschluss und Detektieren der Ringtopologie basierend auf den Zwischenanschluss-Verbindungsinformationen, die in den Slave-Verbindungsinformationen enthalten sind, umfasst.

5. Verwaltungsprogramm, das einen Computer veranlasst, als die Verwaltungsvorrichtung (3) gemäß Anspruch 1 zu fungieren, wobei das Verwaltungsprogramm vorgesehen ist, um den Computer zu veranlassen, als die aktuelle Konfigurationsinformations-Erfassungseinheit (332) und die Ringtopologie-Detektionseinheit (333) zu fungieren.

6. Computerlesbares Aufzeichnungsmedium, das das Verwaltungsprogramm gemäß Anspruch 5 speichert.

## Revendications

1. Dispositif de gestion (3), gérant un réseau de circulation de paquets comprenant un dispositif maître (1) et une pluralité de dispositifs esclaves (2) connectés au dispositif maître (1), le dispositif de gestion (3) comprenant :
une unité d'acquisition d'informations de configuration réelle (332), acquérant des informations de configuration réelle (D3) du réseau réel à partir du dispositif maître (1) ;
une unité de détection de topologie en anneau (333), détectant une topologie en anneau configurée à partir des dispositifs esclaves (2) sur la base des informations de configuration réelle (D3), et affichant de manière identifiable la topologie en anneau dans un diagramme de configuration de réseau réelle (42) affiché sur la base des informations de configuration réelle (D3),
le dispositif de gestion (3) étant **caractérisé en ce que**
les informations de configuration réelle (D3) comprennent des informations de connexion esclave de chacun des dispositifs esclaves (2) et chacune des informations de connexion esclave comprend des informations de connexion entre ports, et
l'unité de détection de topologie en anneau (333) trace une relation de connexion entre un port d'entrée et un port de sortie dans un ordre du port d'entrée vers le port de sortie et détecte la topologie en anneau sur la base des informations de connexion entre ports incluses dans les informations de connexion esclave.

2. Dispositif de gestion (3) selon la revendication 1, dans lequel l'unité de détection de topologie en anneau (333) détermine, sur la base d'informations esclaves (D2) représentant des informations uniques par type de chacun des dispositifs esclaves (2), si la topologie en anneau est prise en charge pour chacun des dispositifs esclaves (2) à partir desquels la topologie en anneau est configurée, dans lequel les informations esclaves comprennent des informations de profil pour identifier des types des dispositifs esclaves.

3. Dispositif de gestion (3) selon la revendication 2, dans lequel l'unité de détection de topologie en anneau (333) affiche de manière identifiable le dispositif esclaves (2) qui ne prend pas en charge la topologie en anneau dans le diagramme de configuration de réseau réelle (42) affiché sur la base des informations de configuration réelle (D3).

4. Procédé de gestion, gérant un réseau de circulation de paquets comprenant un dispositif maître (1) et une pluralité de dispositifs esclaves (2) connectés au dispositif maître (1), le procédé de gestion comprenant :
une étape d'acquisition d'informations de configuration réelle, acquérant des informations de configuration réelle (D3) du réseau réel à partir du dispositif maître (1) ;
une étape de détection de topologie en anneau, détectant une topologie en anneau configurée à partir des dispositifs esclaves (2) sur la base des informations de configuration réelle (D3), et affichant de manière identifiable la topologie en anneau dans un diagramme de configuration de réseau réelle (42) affiché sur la base des informations de configuration réelle (D3),
le procédé de gestion étant **caractérisé en ce que**
les informations de configuration réelle (D3) comprennent des informations de connexion esclave de chacun des dispositifs esclaves (2) et chacune des informations de connexion esclave comprend des informations de connexion entre ports, et
l'étape de détection de topologie en anneau comprend en outre le traçage d'une relation de connexion entre un port d'entrée et un port de sortie dans un ordre du port d'entrée vers le port de sortie et la détection de la topologie en anneau sur la base des informations de connexion entre ports incluses dans les informations de connexion esclave.

5. Programme de gestion, amenant un ordinateur à fonctionner en tant que le dispositif de gestion (3) selon la revendication 1, dans lequel le programme de gestion est prévu pour amener l'ordinateur à fonctionner en tant que l'unité d'acquisition d'informations de configuration réelle (332) et l'unité de détection de topologie en anneau (333).

6. Support d'enregistrement lisible par ordinateur, stockant le programme de gestion selon la revendication 5.
